# FASCICULE DE BREVET EUROPEEN

(11) **EP 0 476 023 B1**
(45) Date de publication et mention de la délivrance du brevet: **27.04.1994**
(21) Numéro de dépôt: 90909445.0
(22) Date de dépôt: 06.06.1990
(51) Int. Cl.: A47L 11/40, B25J 9/00

(54) **PROCEDE ET APPAREIL AUTONOMES DE NETTOYAGE AUTOMATIQUE DE SOL PAR EXECUTION DE MISSIONS PROGRAMMEES**
AUTONOMES VERFAHREN SOWIE APPARAT ZUR AUTOMATISCHEN REINIGUNG DES BODENS DURCH AUSFÜHRUNG VON PROGRAMMIERTEN AUFTRÄGEN
PROCESS AND AUTONOMOUS APPARATUS FOR THE AUTOMATIC CLEANING OF GROUND AREAS THROUGH THE PERFORMANCE OF PROGRAMMED TASKS

(30) Priorité: 07.06.1989 FR 8907758
(43) Date de publication de la demande: 25.03.1992
(60) Demande divisionnaire: 93202777.4
(73) Titulaire: ONET Société Anonyme, 13008 Marseille (FR)
(72) Inventeur: SOUPERT, Jean-Louis, F-13001 Marseille (FR); POUJON, Joel, F-13009 Marseille (FR)
(74) Mandataire: Moretti, René
(86) Numéro de dépôt international: FR9000398
(87) Numéro de publication internationale: WO9014788

(56) Documents cités:
- GB-A- 2 213 047
- US-A- 3 713 505
- US-A- 4 114 711
- US-A- 4 638 445
- US-A- 4 701 893
- US-A- 4 710 020
- US-A- 4 736 116
- US-A- 4 751 658
- US-A- 4 777 416
- US-A- 4 782 550
- US-A- 4 815 008
- US-A- 4 815 840
- US-A- 4 829 442
- Robotics age Vol. 7, No. 4, 4 April 1985, peterborough us h.r. everett : "a second-generation autonomous sentry robot" see the whole document
- Proceedings 1988 ieee international conference on robotics and automation philadelphia 24 - 29 April 1988, pages 1839 - 1841, IEEE, New York, us f. yasutomi & al see the whole document

## Description

La présente invention a pour objet un procédé et appareil autonomes de nettoyage automatique de sol par exécution de missions programmées.

Le secteur technique de l'invention est la fabrication de robots de nettoyage de sol, roulant et se positionnant sur celui-ci pour exécuter les opérations de nettoyage suivant une mission déterminée.

Une des applications principales de l'invention est le balayage automatique et autonome avec légère aspiration de sol dans tous locaux reconnus préalablement, quel que soit les obstacles qui peuvent se présenter dans ces locaux et avec un minimum de surveillance et d'intervention de l'opérateur.

On connait en effet divers dispositifs et procédés de nettoyage de sol ou de parois en mode manuel et en automatique. En effet, avec le développement des techniques d'une part, et la volonté d'amélioration du cadre de vie et de la protection de notre environnement d'autre part, notre Société est de plus en plus exigeante en matière de propreté : les opérations de nettoyage manuelles étant peu valorisantes pour le personnel et demandant beaucoup de main d'oeuvre sont effectuées de plus en plus par des outils montés sur des machines ou des supports pilotés par des opérateurs : ainsi se sont développés des motos et des automobiles de nettoyages de trottoirs et de chaussées, des élévateurs télescopiques pour le nettoyage des façades, des chariots brosse et aspirateur pour le nettoyage des sols etc... Tous ces systèmes sont en général autonomes et nécessitent la présence d'un opérateur technicien au moins pour le piloter dans son environnement, l'amener aux endroits d'intervention et déclencher les outils de nettoyage proprement dits.

Pour des locaux ou des surfaces connues certains fabricants proposent même de supprimer l'opérateur sur l'appareil lui-même en montant sur celui-ci des équipements de télécommande, commandés soit à distance par un opérateur situé à un poste de contrôle soit par un programme pré-enregistré qui lui fait effectuer des taches répétitives et toujours de la même façon. On peut citer par exemple les brevets FR-A-2.599.772 publié le 11 Décembre 1987 et déposé par la société HYPER ROBOTICS INC, sur un 'robot pour l'entretien des immeubles", et FR-A-2.519.576 publié le 18 Juillet 1983 et déposé par la société International ROBOTIC ENGINEERING sur un "robot à pattes grimpeur". Par ailleurs, la publication ROBOTICS AGE, Peterborough, Avril 1986, Volume 7, No.4, pages 29 à 32, par Monsieur EVERETT sur "A second-generation autonomous sentry robot" décrit un robot sentinelle autonome ayant une certaine capacité d'adaptation à son environnement mais sans objectifs de tracé de routes comme dans le nettoyage de sol.

En effet, dans le domaine de nettoyage des sols l'opérateur reste en général nécessaire sur la plupart des engins actuels même s'il a à sa disposition un engin autonome qui comporte des outils et qu'il met en fonction par action sur des boutons de commande ; l'automatisation est donc partielle car il est en effet difficile de la rendre totale pour des sols de locaux qui peuvent être occupés temporairement par des obstacles imprévus, qui ne comportent pas de système de guidage permanent mécanique et dont le tracé n'est jamais le même quand on veut utiliser le même appareil pour plusieurs locaux. Divers appareils prototypes ont été réalisés pour tenter de répondre à ces particularités mais aucun n'y parvient à ce jour.

On peut citer par exemple le brevet US.A 4.114.711 de Monsieur J.T. WILKINS exposant un procédé et un appareil autonome de nettoyage automatique d'un type semblable à la présente invention, comportant des mémoires d'enregistrement de trajectoires et un système de guidage permanent dans un local donné; par ailleurs la publication IEEE PROCEEDINGS, New York, Volume III, 1988, pages 1839 à 1841, of the International Conference on Robotics and Automation, April 24-29, 1988 à PHILADELPHIA sur "A cleaning robot control" décrit un appareil programmé pour suivre des voies droites et éviter son câble d'alimentation.

Le problème posé est de pouvoir déplacer et opérer les outils de nettoyage de sol sans intervention directe de l'opérateur en automatique et de manière autonome dans tous locaux, quelques soient les obstacles qui peuvent surgir, sans installation permanente mécanique ou autres de guidage, et en effectuant plusieurs missions successives différentes.

Une solution au problème posée est un procédé de nettoyage automatique de sol avec un appareil autonome de type comportant des outils connus adaptés audit nettoyage,des moyens de propulsions et de direction par roues,une alimentation électrique par batterie embarquée, divers convertisseurs et relais,et des manettes de commandes regroupées sur un pupitre ayant un afficheur et un clavier, et permettant un fonctionnement desdits outils et des dits moyens de propulsions et de direction,lequel appareil est recouvert d'un carénage de protection et comporte: un système électronique du type micro-ordinateur comportant au moins un microprocesseur, une mémoire morte fixe, une mémoire effaçable et diverses cartes d'interfaces d'entrées/sorties connectées en particulier audit pupitre et aux divers composants permettant le fonctionnement et la mise en route desdits outils et moyens de propulsion et de direction,des capteurs fixes de contrôle de distance aux obstacles et au moins un capteur d'initialisation,lesquels capteurs sont connectés à au moins une desdites cartes d'entrées/sorties. Le procédé suivant l'invention est alors:
- on charge ladite mémoire morte avec un programme assurant d'une part, en permanence et d'une manière connue et automatique la gestion de toutes les cartes d'interfaces d'entrées/sorties et de tous les équipements reliés aux dites cartes, et d'autre part, à la demande et successivement, en plusieurs lieux et pour des missions différents, l'une des opérations suivantes :
- à partir d'un point de repère fixe sur lequel on cale ledit capteur d'initialisation, on dirige manuellement ledit appareil par ces manettes de commande à travers le système électronique de façon à lui faire effectuer une trajectoire donnée sur le sol à nettoyer, avec mise en route des outils appropriés, et on enregistre au fur et à mesure dans ladite mémoire effaçable dudit microprocesseur chaque point spécifique de cette trajectoire, tel que lors de changement de direction, de vitesse, de mise en route et d'arrêt d'outils et de changement de mode,
- à la fin de cet apprentissage manuel on replace ledit appareil de telle façon que ledit capteur d'initialisation se recale sur un point de repère fixe et on fait alors exécuter à l'appareil en mode automatique les déplacements et les opérations d'un nettoyage tels que mise en mémoire et suivant une trajectoire enregistrée,
- durant cette phase d'exécution, on scrute d'une manière connue et en permanence l'environnement de l'appareil grâce auxdits capteurs fixes de contrôle de distance, on détecte alors tout obstacle qui apparait et qui n'était pas lors de la phase d'apprentissage et s'il gêne l'exécution des opérations on arrête l'appareil et on peut effectuer alors une procédure de contournement,
- à tout moment lors de cette phase d'exécution on peut ramener ledit appareil au point de repère fixe initial en mode manuel et faire soit recommencer la même mission enregistrée de nettoyage suivant la trajectoire apprise, soit exécuter une autre mission de nettoyage à enregistrer préalablement suivant le même procédé.

Dans un mode d'exécution préférentiel on équipe ledit appareil d'un système de positionnement connu et on place en des points de référence fixes, situés à proximité du sol à nettoyer, des balises de repérage compatibles avec ledit système de positionnement :
- on interroge à intervalle donné et à chaque dit point spécifique de la phase d'apprentissage, lesdites balises et on enregistre dans ladite mémoire effaçable chaque position des points spécifiques alors repérés, simultanément avec les informations concernant l'opération nettoyage en cours,
- lors de la phase d'exécution on compare la position réelle à tout instant de l'appareil par rapport aux mêmes balises avec celle calculée théoriquement à partir des positions des points spécifiques enregistrés lors de la même opération de nettoyage, et on corrige le déplacement de l'appareil si les positions sont différentes de façon à recaler celui-ci sur la trajectoire théorique réelle enregistrée.

Une autre solution au problème posé est un appareil autonome de nettoyage automatique de sol comportant un bâti support de type comprenant des outils connus adaptés audit nettoyage, des moyens de propulsions et de direction par roues, une alimentation électrique par batterie embarquée, divers convertisseurs et relais, et des manettes de commandes, regroupés sur un pupitre comportant un affichage et un clavier, et permettant le fonctionnement desdits outils et des dits moyens de propulsions et de direction, lequel appareil est recouvert d'un carénage de protection ; cet appareil comporte en outre un système électronique de type micro-ordinateur composé d'au moins un microprocesseur, une mémoire morte fixe, une mémoire effaçable et diverses cartes d'interfaces d'entrées/sorties connectées en particulier aux divers composants permettant le fonctionnement et la mise en route desdits outils et moyens de propulsion et de direction, des capteurs fixes de contrôle de distance et au moins un capteur d'initialisation, lesquels capteurs sont connectés à au moins une desdites cartes d'entrées/sorties et sont placés sur ledit carénage de protection; une carte d'entrées/sorties spécifique du microprocesseur est reliée au pupitre, et la mémoire morte du système électronique est chargée par un programme assurant d'une part, en permanence et d'une manière connue et automatique, la gestion de toutes les cartes d'interfaces d'entrées/sorties et de tous les équipements reliés aux dites cartes, et d'autre part à la demande et successivement en plusieurs lieux et pour des missions différentes, d'une phase d'apprentissage par mémorisation d'une mission de nettoyage effectuée manuellement dans un premier temps, puis une phase d'exécution par répétition de cette mission de nettoyage enregistrée et cela, d'une manière automatique même en cas d'obstacle imprévu détecté par lesdits capteurs de contrôle des distances et à partir d'un même point de repère sur lequel est recalé ledit capteur d'initialisation au début de chaque exécution de la même mission sur la même trajectoire apprise.

Dans un mode de réalisation préférentiel, on enregistre ladite phase d'apprentissage dans une mémoire effaçable située dans un support d'enregistrement interchangeable ; on peut changer alors ledit support et on enregistre sur d'autres supports autant de missions correspondantes chacune à un sol et à un type de nettoyage donné et choisi par l'opérateur.

Le résultat est de nouveaux procédés et dispositifs autonomes de nettoyage automatique de sol pour exécution de missions programmées dont les caractéristiques permettent de satisfaire aux impératifs de toutes ces missions quelque soit les perturbations pouvant intervenir au cours de celles-ci. En effet, la combinaison sur un même engin des divers équipements et procédés dont certains sont du reste connus et développés par ailleurs tel que décrit ci-après, permet à ces dits engins de s'adapter à toute disposition de sols sans programmation et équipement propre à celui-ci; en particulier l'apprentissage par guidage préalable avec un opérateur est suffisant pour permettre ensuite la reproduction du tracé et l'exécution des manoeuvres de nettoyage proprement dites en automatique, ce qui simplifie énormément l'adaptation de l'engin à tout local et ne demande pas d'opérateur spécialisé.

De plus la possibilité d'enregistrer cet apprentissage dans des mémoires interchangeables assure une adaptabilité sans limite par changement de ces mémoires.

Par ailleurs, le repérage en option de l'engin par tous systèmes de positionnement absolu lié au local permet à l'engin de se recaler en permanence dans celui-ci, et d'exécuter donc sa mission en respectant son tracé même s'il y a des dérives mécaniques, parasites, que l'on ne peut jamais éliminer : ceci a été du reste un frein à tout développement de ce type de robot qui, après quelques minutes de fonctionnement, se perdait en dehors de son tracé prévu, ce qui limitait son intérêt car il nécessitait un opérateur de contrôle pour le remettre sur sa trajectoire à intervalles réguliers.

Un autre intérêt est que même si après la phase d'apprentissage des obstacles nouveaux se placent sur le tracé de l'appareil, celui-ci, grâce au procédé et au dispositif de la présente invention, peut le contourner et se replacer sur sa trajectoire une fois le contournement effectué, et cela sans intervention de l'opérateur.

Ainsi tous ces dispositifs et procédés, apportant chacun quelques avantages et il y en a d'autres, tels que dans le descriptif suivant, sont complémentaires les uns des autres, et en l'absence de l'un d'eux les opérations ne pourraient pas être réalisées correctement sans appel fréquent à un opérateur contrôleur, ce qui réduit alors l'intérêt de tels équipements assez onéreux : les prix de ceux-ci se justifient en effet, et ne peuvent s'amortir pour un utilisateur que si la présence de personnel est suffisamment réduite, si ce n'est supprimé pour permettre alors à une seule personne d'opérer et de suivre plusieurs appareils à la fois, augmentant alors les rendements et les capacités de nettoyage simultanées.

Dans le descriptif suivant, nous décrivons essentiellement un exemple de procédé de dispositif suivant l'invention en particulier dans l'application au nettoyage de sol avec un engin comportant des outils et des équipements connus par ailleurs, mais d'autres outils et équipements et applications peuvent être envisagés : les dessins, figures et descriptifs ci-après n'ont aucun caractère limitatif.

La figure 1 est une vue schématisée de côté d'un exemple d'appareil suivant l'invention.

La figure 2 est une vue de dessus du même appareil le long d'une paroi.

La figue 3 est un schéma simplifié du système électronique du pilotage de l'appareil.

La figure 4 est un exemple de trajectoire et de mission apprise par l'appareil, et rééxécutée à la demande.

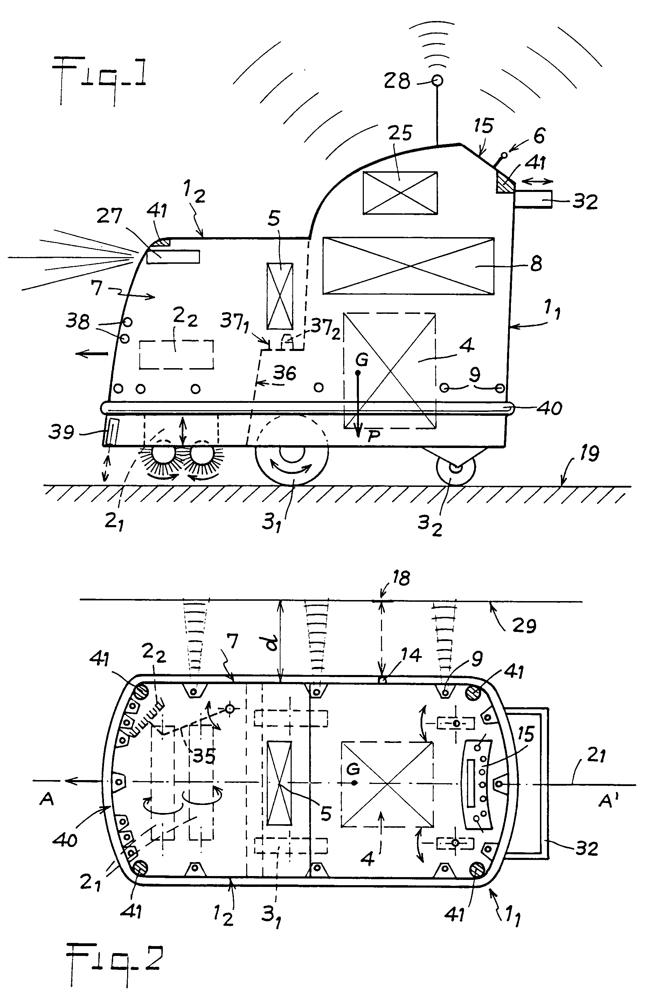

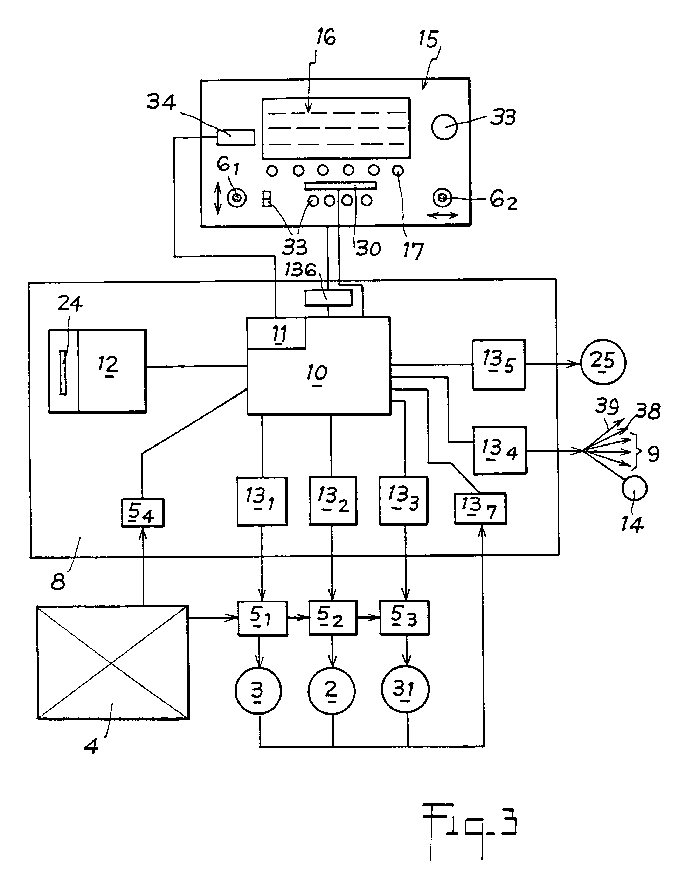

La figure 1 est une vue schématisée de côté d'un exemple d'un appareil 1 autonome de nettoyage automatique de sol 19 grâce à divers outils 2 spécialisés connus tel qu'incluant au moins une brosse centrale rotative 2₁, une aspiration inférieure et une brosse latérale 2₂ montée sur un bras extensible permettant son déploiement sur un des côtés de l'appareil comme indiqué sur la figure 2. Ces outils sont commandés en mise en place puis en fonctionnement, tel que en montée ou descente pour l'outil ventral 2₁, en mise en route pour l'aspiration et le balayage, en extension et en rotation pour la brosse latérale, à travers une carte d'interface d'un système électronique 8 décrit ci-après et de relais 5 alimentés par une batterie embarquée 4. L'ensemble de ces outils 2 d'une part, et des moteurs d'entraînement, des équipements électriques, électroniques. d'alimentation et de commande d'autre part sont montés sur au moins 2 batis ou châssis, recouverts d'un carénage 7, en une ou plusieurs parties, camouflant l'ensemble de l'appareil et lui donnant un aspect extérieur d'une part esthétique suivant le choix de l'utilisateur, et d'autre part fonctionnel pour éviter les risques d'accrochages.

Pour éviter également les risques consécutifs à des contacts brutaux avec un autre obstacle en mouvement qui n'aurait pas été détecté, suffisamment rapidement ou à cause d'un angle mort, par les capteurs décrits ci-après, une ceinture 40 ou arceau de sécurité entoure tout l'appareil de préférence à sa partie basse : cette ceinture peut être constituée de matière de type mousse, caoutchouc ou plastique à la manière d'un parechoc, et comporter des capteurs de contact qui lorsqu'ils sont sollicités permettent de déclencher l'arrêt immédiat de l'appareil.

Autour de ce carénage 7 et à une hauteur quelconque mais de préférence à 420 mm du sol 19, sont disposés en ceinture des capteurs de contrôle et de mesure 9 de distance pour la détection d'obstacles tel que décrit ci-après et qui peuvent être en particulier des capteurs ultra-sonores, en nombre égal au moins à seize dont au moins 3 sur chaque face latérale et neuf sur la moitié avant bloc outil 1₂ en avant des roues centrales 3₁.

Sur l'avant de l'appareil 1 et à une hauteur quelconque du sol 19, il peut comporter en option une caméra vidéo 27 de tout type connu qui permet de filmer l'espace situé devant le carénage : cette caméra est reliée et couplée, d'une manière connue, sur au moins deux canaux automatiques commutables en cas de perturbation sur un des canaux à un système émetteur/récepteur d'ondes 28, radio compatible, travaillant par exemple à 1,5 Ghz et permettant de transmettre les images prises par ladite caméra à un poste de contrôle, disposant également d'un émetteur/récepteur compatible et d'un moniteur vidéo.

Un opérateur peut ainsi visualiser à la demande, en sécurité ou en vérification, ce qui se passe dans l'appareil 1.

Sur l'avant également de l'appareil 1 et à une hauteur comprise entre 600 et 900 mm, il comporte au moins un autre capteur 38 de contrôle et de mesure de distance comme ceux de la ceinture 9 pour la détection d'obstacles hauts n'ayant pas d'appui au sol sous toute leur surface, tel que par exemple les tables et les fenêtres. Ce dit capteur 38 peut être un de ceux de la ceinture 9 décalé alors vers le haut.

De plus toujours à l'avant, il peut être disposé au moins un capteur 39 qui peut être de type infrarouge, placé et orienté en dessous de l'appareil en direction du sol 19 afin de déceler une rupture de celui-ci tel que par exemple un escalier descendant, une trappe ouverte ou un quai : de préférence on place un des ces capteurs 39 à chaque angle avant de l'appareil.

Le châssis support constituant l'ossature de la partie arrière 1₁ de celui-ci peut être un ensemble mécanosoudé rigide entièrement réalisé en acier. La partie inférieure peut être fabriquée en une seule tôle pliée qui constitue l'ossature rigide encaissant tous les efforts et les déformations mécaniques, et la partie supérieure qui reçoit le carénage 7 peut être constituée de cornières et de tôles fines.

Les dimensions principales extérieures peuvent être de l'ordre de 750 mm de longueur, 500 mm de largeur et 1 350 mm de hauteur maximum. La structure de cette partie arrière 1₁ repose par l'intermédiaire de suspensions sur quatre roues 3 dont deux roues motrices 3₁ et deux roues folles 3₂. Les deux roues motrices 3₁ sont à l'avant de cette partie, et en avant du centre de gravité G de l'ensemble de l'appareil 1, et en arrière alors de la partie 1₂ supportant les outils 2 proprement dit de nettoyage placés alors en porte à faux. Ces roues motrices sont dans des plans fixes latéraux parallèles à l'axe AA' de l'appareil comme représenté sur la figure 2 : leur diamètre peut être de 300 mm environ. Les deux roues folles 3₂ sont placées à l'arrière et montées libres aussi bien sur leur axe de rotation que dans le plan vertical, afin de pouvoir autoriser les changements de direction : leur diamètre peut être de 120 mm environ.

Les roues motrices sont entraînées par des blocs motoréducteurs électriques modulaires et étanches, indépendant l'un de l'autre et dont la commande à des vitesses différentes entraîne des changements de direction. De plus, des systèmes connus de mesure de la rotation puis d'intégration de celle-ci, permettent le calcul de la distance parcourue par chaque roue, et donc la connaissance de l'orientation et de la position instantanée de l'appareil 1.

La partie avant 1₂ de l'appareil ou bloc outils accrochée en porte à faux sur la partie arrière 1₁ peut avoir des dimensions en rapport avec celles de la partie arrière, citées en exemple ci-dessus, d'environ 500 mm de largeur, 400 mm de longueur et 960 mm de hauteur, avec un poids maximum par exemple de 50 Kg.

Les surfaces de séparation 36 entre la partie avant ou bloc-outil 1₂ et la partie arrière 1₁ peut être en forme de marche d'escalier constituée par exemple de tôle châssis avec un rebord 37₁ plan recevant les efforts d'appui comprenant un système 37₂ de centrage et de retenu entre les deux parties dont l'une contient par exemple au moins une partie femelle et l'autre une pièce mâle compatible.

L'ensemble relais 5 de commande de ce bloc-outil est situé alors proche de cette surface de séparation et n'est relié à la partie arrière 1₁ que par un seul câble d'alimentation et de télécommande ; un autre cable permet la liaison également des capteurs 9, 38 et 39 situés sur la partie avant et ces 2 cables comportent chacun une prise déconnectable dont la séparation permet très facilement celle du bloc-outil qu'on dégage alors de la partie arrière en le soulevant simplement par des poignées de la surface d'appui 37₁. Ceci permet un échange standard modulaire et très rapide, soit pour contrôle ou entretien, soit pour installer un autre bloc-outil comportant d'autres fonctions.

Dans la partie supérieure arrière de l'appareil 1₁ et éventuellement sous ledit carénage 7, l'appareil peut comporter en option un système de positionnement connu 25 compatible avec des balises de références fixes situées à proximité du sol 19, par exemple sur des piliers, plafond ou murs d'un local à nettoyer, et à partir desquelles et à tout moment ledit appareil est positionné sur ledit sol 19 par interrogation de ces dites balises, grâce à une émission d'ondes compatibles avec celles-ci et la perméabilité du carénage. On calcule alors leur distance à l'appareil et par la même on connait ladite position de celui-ci.

Enfin, dans cette même partie supérieure et à l'arrière de l'appareil 1, celui-ci comporte un pupitre 15 de commande et de contrôle, tel que décrit ci-après avec au moins un levier ou manette de commande 6 de la motricité de roues et direction 3₁ ainsi qu'une poignée de manoeuvre 32.

La figure 2 est une vue de dessus du même appareil 1 placé le long d'une paroi 29. On retrouve le bloc outil 1₂ contenant en particulier la brosse centrale 2₁.

Dans la présente configuration cette brosse centrale est en fait constituée de deux balais 2₁ en cylindres d'axes horizontaux et contra rotatifs, nettoyant donc le sol en avant des roues et soulevant les salissures qui sont alors aspirées dans un réservoir situé au-dessus. Ces balais rotatifs peuvent être par exemple de 30 cm de long minimum et peuvent être préférentiellement de la largeur de l'appareil soit dans notre exemple de réalisation 500 mm pour augmenter la surface à nettoyer à chaque passage et améliorer ainsi le rendement.

La brosse latérale 2₂ montée sur un bras extensible 35 est figurée ici en position rentrée. En position sortie ce bras 35 est tel qu'il permet d'assurer un balayage le long de ladite paroi 29 située par exemple à une distance (d) de 30 cm environ de l'appareil : cette distance est contrôlée par au moins 3 capteurs 9 fixes de contrôle, situés du même côté, et permettant l'asservissement de trajectoire 21 de l'appareil tel que son axe AA' reste parallèle le long de ladite paroi 29 et à distance constante.

En effet, dans ce cas ou chaque fois que l'on veut une trajectoire parallèle et proche d'une paroi, on interroge cycliquement les trois au moins desdits capteurs 9 fixes, disposés sur la face du dit carénage 7 qui doit rester le long de ladite paroi, on relève et on compare les distances mesurées par chacun et en cas de variation de celles-ci les unes par rapport aux autres, on agit sur les moyens de direction que sont les roues motrices 3₁ pour annuler ladite variation.

Dans la partie arrière 1₁ de l'appareil tous les principaux équipements de la figure 1 ne sont pas représentés dans la figure 2. On retrouve cependant les batteries embarquées 4 assurant l'alimentation électrique de tout l'appareil délivrant par exemple une tension de 48 volts, tel que 24 éléments de 2 volts, et permettant un fonctionnement normal de l'ensemble pendant au moins 4 heures, à travers des relais, convertisseurs et/ou variateurs 5, lesquels sont situés dans la partie avant et pilotés par le système électronique décrit à la figure suivante.

Le pupitre 15 est également décrit ci-après, et la barre ou poignée 32 de guidage manuel pour déplacer l'appareil, quand sa motorisation est arrêtée, peut avoir toute forme : être basculable, rétractable et/ou démontable car en fonctionnement normal elle n'est pas nécessaire.

Cette poignée de manoeuvre ou de guidage 32 dans un mode de réalisation préférentiel est escamotable dans le carénage de la partie arrière et s'intègre en position rentrée dans celui-ci. Une commande de débrayage est associée en outre à cette poignée de telle façon que quand on la tire pour la dégager du carénage afin de s'en servir pour manoeuvrer l'appareil manuellement, les roues motrices sont automatiquement débrayées par un dispositif électrique, mécanique ou les deux.

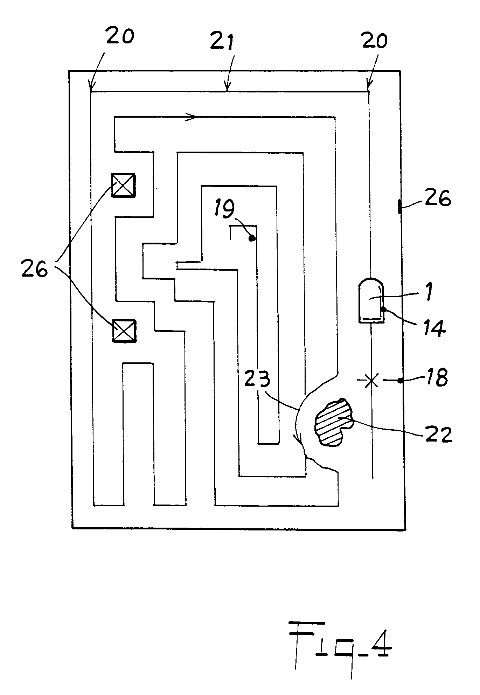

Sur un des côtés de l'appareil est disposé un capteur 14 d'initialisation spécifique qui peut détecter, seulement quand ledit appareil passe devant à une distance donnée, un point de repère fixe 18 par exemple situé sur la paroi 29. Ce capteur peut être optique, à infrarouge, et le point de repère comportant un code d'identification reconnaissable par l'appareil. Ceci permet l'initialisation de procédés suivant l'invention, tel que décrit précédemment et rappelé dans la figure 4. On fait fonctionner par exemple l'appareil alors en mode suivi de paroi automatique depuis l'amont de ce point à une distance constante donnée associée correspondant à cette initialisation jusqu'à ce que l'appareil, passant devant le point de repère, passe alors en mode d'enregistrement ou en mode exécution.

Aux quatre angles supérieurs de l'appareil et intégré dans son carénage, il est disposé un clignotant lumineux 41, qui s'allume dès que l'appareil se met en mouvement pour alerter toute personne alentour de son approche.

Par ailleurs, l'appareil peut être doté d'un klaxon qui se déclenche automatiquement quand un des dits capteurs 9 de contrôle de distance détecte un obstacle devant lui, empêchant l'exécution de sa trajectoire et faisant donc arrêter l'appareil. Après un temps de temporisation la programmation de l'appareil peut ensuite, si l'obstacle demeure, lui faire effectuer une procédure de contournement, mais s'il s'agit de personnes, le klaxon et les clignotants doivent les faires s'écarter pour que l'appareil reprenne sa trajectoire.

La figure 3 est un schéma simplifié du système électronique 8 de pilotage de l'appareil 1 décrit précédemment et des différents organes périphériques de celui-ci. Ce système électronique comporte en particulier au moins un microprocesseur 10 associé à une mémoire morte fixe 11 de type "EEPROM" et une mémoire effaçable de type "RAM" 12. Il est alimenté à travers un régulateur 5₄ par les batteries 4 et peut comporter sa propre alimentation de sauvegarde. Il est relié par ailleurs à au moins une carte d'interface d'entrée/sortie 13 connectée elle-même à tous les organes et composants permettant le fonctionnement et la mise en route des outils 2, qui dans une version préférentielle de réalisation peuvent être au nombre de huit, des moyens de propulsion 3, du système de positionnement 25, des capteurs 9, 38, 39 et 14, du pupitre de commande 15 et de tout système de sécurité 31 tel que l'arceau de protection ou ceinture 40, les clignotants 41,...

Il peut y avoir une carte interface par type de composants comme représentées sur la figure et numérotées de 13₁ à 13₇, ou certains groupes de composants peuvent être reliés à une seule carte, et celles-ci peuvent comporter un microprocesseur intégré pour soulager celui du système central.

L'ensemble de ces cartes interfaces et de mémoire, est reliée au microprocesseur 10 par un ou plusieurs bus suivant l'architecture retenue. Les organes de puissance sont alimentés directement par les batteries 4 à travers des relais, variateurs et/ou convertisseurs 5 pilotés d'une manière connue par lesdites cartes d'interface 13 correspondantes, et suivant le déroulement du procédé suivant l'invention, grâce au programme contenu dans la mémoire 11 du microprocesseur 10 et dont un exemple d'exécution est décrit dans la figure 4 et ci-après.

Ces dits organes de puissance sont eux-mêmes contrôlés par des capteurs renvoyant l'information de leur fonctionnement par une carte d'entrée spécifique 13₇.

Dans un mode de réalisation préférentiel ladite mémoire effaçable 12 est constituée d'une carte de sauvegarde sur laquelle est connectée tout support d'enregistrement interchangeable 24 de type disquette ou cassette magnétique ou toute mémoire effaçable de type RAM ("Read after memory") de telle façon que l'on puisse enregistrer, transférer puis reproduire plusieurs missions, pour le même ou pour des sols différents, et correspondant chacune à un type de nettoyage donné et choisi par l'opérateur.

Pour simple changement desdits supports de mémoire effaçables dans la mémoire desquels on a enregistré les phases d'apprentissage desdites missions qui sont alors transférées dans la mémoire 12, on peut faire effectuer à l'appareil chacune d'entre elles.

Pour obtenir la meilleure compréhension, diversité et évolution possible de la commande et du contrôle de l'appareil, le pupitre 15 de contrôle et de commande de l'appareil comporte au moins un levier de marche avant et arrière 6₁, un levier de changement de direction droite et gauche 6₂, un clavier d'au moins six boutons de contrôle des fonctions dudit programme et d'ordres de missions, et un affichage 16 d'au moins trois lignes dont la première affiche au moment considérée lesdites fonctions d'ordres affectées alors auxdits boutons 17, la deuxième affiche les questions et les messages édités par le système électronique au fur et à mesure du déroulement dudit programme et la troisième affiche la réponse et l'ordre rentré par l'opérateur.

Ainsi même si on change les données du programme contenu dans la mémoire 11 et si on rajoute des fonctions, tels que des outils ou des capteurs supplémentaires, il n'est pas nécessaire de modifier ce dit pupitre ; il suffit de changer les affichages à l'écran et les affectations des boutons 17 du clavier éventuellement par l'intermédiaire du logiciel. Celui-ci peut rester ainsi limité à six boutons principaux, car s'il faut commander d'autres fonctions, il suffit d'affecter au même bouton d'autres possibilités d'ordres et d'afficher séquentiellement et simultanément à l'opérateur la légende et la signification correspondante.

Par ailleurs, ledit pupitre 15 de contrôle peut comporter un emplacement 30 permettant d'y connecter ledit support 24 d'enregistrement interchangeable afin d'en simplifier l'interchangeabilité par l'opérateur.

Le pupitre comprenant également d'autres boutons et signaux 33 de contrôle connus tel que l'alimentation générale, les alarmes, le contrôle des batteries, et...

Il peut être disposé également une fiche de raccordement 34 permettant d'y connecter un terminal extérieur pouvant dialoguer avec le système électronique 8 pour effectuer les tests, et/ou pour apporter des modifications aux données du programme de base enregistré dans la mémoire 11.

Enfin, ledit pupitre de commande 15 peut inclure un microprocesseur qui gère les informations entrées par l'opérateur dans ce pupitre, et celles générées par le système électronique 8 pour l'affichage 16 et l'affectation des fonctions du clavier 17, lequel microprocesseur remplace la carte d'interface spécifique 13₆ et permet la connexion dudit pupitre 15 par une ligne série directement au microprocesseur 10.

La figure 4 est un exemple de trajectoire et de mission enregistrée et apprise par l'appareil 1 tel que décrit précédemment et rééxécutée à la demande.

On dispose pour cela suivant le procédé de l'invention et dans une réalisation préférentielle des balises 26 sur des surfaces tels que piliers ou parois à proximité du sol 19 à nettoyer, et en nombre suffisant pour que tout endroit de ce sol soit à portée directe d'au moins 2 balises si ce n'est 3. On amène l'appareil 1 en mode libre, sans utiliser ses capacités d'enregistrement ou de reproduction à un point de repère 18 fixe choisi ou en amont de celui-ci sur lequel on cale le capteur d'initialisation 14 à une position et distance donnée. On enclenche ensuite par l'un des boutons du clavier 17 le mode de pilotage manuel et d'enregistrement, géré par le programme préalablement chargé dans ladite mémoire 11 du micro-ordinateur 10, lequel transmet les ordres à toutes les cartes d'interfaces d'entrée/sortie 13 des équipements de propulsion et d'outils de nettoyage.

On dirige manuellement l'appareil 1 par les manettes de commande 6 du pupitre de façon à lui faire exécuter la trajectoire voulu 21 par exemple le long d'une cloison, autour des piliers et au centre du local. Pour le suivi de cloison on peut passer mode asservissement afin que l'appareil se guide lui-même sur celle-ci comme décrit précédemment. L'opérateur met en route par ledit clavier 17 des outils de nettoyage appropriés à ce qu'il souhaite suivant l'endroit où il se trouve et on enregistre au fur et à mesure dans ladite mémoire effaçable 12 dudit micro-ordinateur toutes les informations en retour des capteurs de contrôle des équipements et des positions, et chaque point spécifique 20 de la trajectoire et de mise en route et d'arrêt et d'outils et de changement de mode (manuel/libre, suivi de paroi, manuel/ enregistrement,...).

A la fin de cette apprentissage manuel, on replace l'appareil en face dudit point de repère 18 jusqu'à réinitialiser sa position de début d'apprentissage en utilisant par exemple le mode de suivi de paroi et on passe alors en mode exécution automatique : l'appareil rééxécute seul les déplacements et les opérations de nettoyage telles que mises en mémoire et suivant la trajectoire 21 enregistrée. Durant cette phase d'exécution l'appareil scrute en permanence son environnement surtout en avant, grâce aux capteurs 9 de distance dont 7 au moins sont disposés vers l'avant, qui détectent alors tout obstacle qui n'était pas lors de la phase d'apprentissage, et s'il gène la trajectoire, l'appareil s'arrête. Si on a choisi de programmer préalablement cette possibilité, le système électronique peut faire effectuer alors une procédure de contournement par exécution d'un mode de suivi de paroi le long dudit obstacle 22 suivant un côté prédéterminé jusqu'à recouper la trajectoire mise en mémoire qu'il peut alors reprendre.

Ce suivi de trajectoire se fait avec très peu d'écart et d'erreur à la reproduction d'une part grâce à tout système de contrôle connu des rotations des roues motrices 3 qui permet par intégration de connaître exactement la distance parcourue et de reproduire les courbes avec exactitude, et d'autre part grâce au système de positionnement 25 connu embarqué sur l'appareil. Celui-ci relève les distances de l'appareil aux balises 26, à tout instant et surtout à chaque point spécifique 20 , que ce soit en mode apprentissage pour l'enregistrement ou en mode d'exécution pour la vérification, par comparaison, entre cet enregistrement et la trajectoire réelle, afin de faire exécuter les corrections éventuelles nécessaires. Ainsi au bout de 4 h de fonctionnement en nettoyage, des essais ont démontré que l'écart final de position est bien inférieur à 20 cm, ce qui est compatible avec les débattements des outils et des capteurs d'obstacle et ne bloque jamais l'appareil.

La présente invention n'est pas limitée au mode de réalisation décrit ci-dessus et qui ne constitue que des exemples de dispositifs et de procédés suivant l'invention : des modifications et des variantes peuvent être apportées dans le cadre de celle-ci en particulier dans le choix des équipements de positionnement 25, du système électronique 8 et du programme d'exécution et de pilotage.

## Revendications

1. Procédé de nettoyage automatique de sol avec un appareil autonome (1) de type comportant des outils connus adaptés (2) audit nettoyage, des moyens de propulsions et de direction par roues (3), une alimentation électrique par batterie (4) embarquée, divers convertisseurs et relais (5), et des manettes de commandes (6) regroupées sur un pupitre (15) ayant un afficheur (16) et un clavier (17), et permettant le fonctionnement desdits outils (2) et des dits moyens de propulsions et de direction, lequel appareil est recouvert d'un carénage de protection (7) et comporte un système électronique (8) du type micro-ordinateur comportant au moins un microprocesseur (10), une mémoire morte fixe (11), une mémoire effaçable (12) et diverses cartes d'interfaces (13) d'entrées/sorties connectées en particulier audit pupitre (15) et aux divers composants permettant le fonctionnement et la mise en route desdits outils (2) et moyens de propulsion et de direction (3), des capteurs (9) fixes de contrôle de distance aux obstacles et au moins un capteur d'initialisation (14), lesquels capteurs sont connectés à au moins une desdites cartes d'entrées/sorties (134) caractérisé en ce que :
- on charge ladite mémoire morte (11) avec un programme assurant d'une part, en permanence et d'une manière connue et automatique la gestion de toutes les cartes d'interfaces d'entrées/sorties (13) et de tous les équipements reliés aux dites cartes, et d'autre part, à la demande, et successivement en plusieurs lieux et pour des missions différents l'une des opérations suivantes :
- à partir d'un point de repère fixe (18) sur lequel on cale ledit capteur d'initialisation (14), on dirige manuellement ledit appareil par ces manettes de commande (6) à travers le système électronique (10) de façon à lui faire effectuer une trajectoire donnée (21) sur le sol à nettoyer (19), avec mise en route des outils appropriés (2), et on enregistre au fur et à mesure dans ladite mémoire effaçable (12) dudit microprocesseur chaque point spécifique (20) de cette trajectoire (21), tel que lors de changement de direction, de vitesse, de mise en route et d'arrêt d'outils et de changement de mode,
- à la fin de cet apprentissage manuel on replace ledit appareil de telle façon que ledit capteur d'initialisation (14) se recale sur un point de repère fixe (18) et on fait alors exécuter à l'appareil (1) en mode automatique les déplacements et les opérations d'un nettoyage tels que mise en mémoire et suivant une trajectoire enregistrée (21),
- durant cette phase d'exécution, on scrute d'une manière connue et en permanence l'environnement de l'appareil grâce auxdits capteurs (9), (38), (39) fixes de contrôle de distance, on détecte alors tout obstacle (22) qui apparait et qui n'était pas lors de la phase d'apprentissage et s'il gêne l'exécution des opérations on arrête l'appareil et on peut effectuer alors une procédure de contournement (23),
- à tout moment lors de cette phase d'exécution on peut ramener ledit appareil au point de repère fixe initial (18) en mode manuel et faire soit recommencer la même mission enregistrée de nettoyage suivant la trajectoire apprise (21), soit exécuter une autre mission de nettoyage à enregistrer préalablement suivant le même procédé.

2. Procédé de nettoyage automatique de sol suivant la revendication 1 caractérisé en ce que :
- on enregistre ladite phase d'apprentissage dans une mémoire effaçable (12) située dans un support (24) d'enregistrement interchangeable,
- on change ledit support et on enregistre sur d'autres supports autant de missions correspondantes chacune à un sol et à un type de nettoyage donné et choisi par l'opérateur.

3. Procédé de nettoyage automatique de sol selon l'une quelconque des revendications 1 et 2 caractérisé en ce que :
- on équipe ledit appareil (1) d'un système de positionnement connu (25) et on place en des points de référence fixes situés à proximité du sol (19) à nettoyer des balises (26) de repérage compatibles avec ledit système de positionnement (25),
- on interroge, à intervalle donné et à chaque dit point spécifique (20) de la phase d'apprentissage, lesdites balises (26) et on enregistre dans ladite mémoire (12) effaçable la position alors repérée, simultanément avec les informations concernant l'opération de nettoyage en cours,
- lors de la phase d'exécution on compare la position réelle de l'appareil par rapport aux mêmes balises (26) avec celle enregistrée lors de la même opération de nettoyage et au même point donné (20), et on corrige le déplacement de l'appareil si les positions sont différentes, de façon à recaler celui-ci sur la trajectoire réelle enregistrée (21).

4. Appareil autonome de nettoyage automatique de sol comportant un bâti support de type comprenant des outils connus adaptés (2) audit nettoyage, des moyens de propulsions et de direction par roues (3), une alimentation électrique par batterie (4) embarquée, divers convertisseurs et relais (5), et des manettes de commandes (6), regroupées sur un pupitre (15) ayant un affichage (16) et un clavier (17) et permettant le fonctionnement desdits outils (2) et des dits moyens de propulsions et de direction, lequel appareil est recouvert d'un carénage de protection (7) et comporte un système électronique (8) de type micro-ordinateur composé d'au moins un microprocesseur (10), une mémoire morte fixe (11), une mémoire effaçable (12) et diverses cartes d'interfaces (13) d'entrées/sorties connectées en particulier aux divers composants permettant le fonctionnement et la mise en route desdits outils (2) et moyens de propulsion et de direction (3), des capteurs (9) fixes de contrôle de distance et au moins un capteur d'initialisation (14), lesquels capteurs sont connectés à au moins une desdites cartes d'entrées/sorties (134) et sont placés sur ledit carénage de protection (7), caractérisé en ce qu'il comporte une carte d'entrées/sorties spécifique (136) du microprocesseur (10), reliée audit pupitre (15) et la mémoire morte (11) du système électronique (8) est chargée par un programme assurant d'une part, en permanence et d'une manière connue et automatique, la gestion de toutes les cartes d'interfaces d'entrées/sorties (13) et de tous les équipements reliés aux dites cartes, et d'autre part à la demande et successivement en plusieurs lieux et pour des missions différentes d'une phase d'apprentissage par mémorisation d'une mission de nettoyage effectuée manuellement dans un premier temps, puis une phase d'exécution par répétition de cette mission de nettoyage enregistrée et cela, d'une manière automatique même en cas d'obstacle imprévu (22) détecté par lesdits capteurs (9) de contrôle des distances et à partir d'un même point de repère (18) sur lequel est recalé ledit capteur d'initialisation (14) au début de chaque exécution de la même mission sur la même trajectoire (21) apprise.

5. Appareil autonome de nettoyage automatique de sol suivant la revendication 4 caractérisé en ce que ladite mémoire effaçable (12) est constituée d'une carte de sauvegarde sur laquelle est connectée tout support d'enregistrement interchangeable (24) de type disquette magnétique ou autre mémoire effaçable de type "RAM" de telle façon que l'on puisse enregistrer et reproduire plusieurs missions par simple changement dudit support de mémoire effaçable.

6. Appareil autonome de nettoyage automatique de sol suivant l'une quelconque des revendications 4 et 5 caractérisé en ce qu'il comporte un système de positionnement connu (25) compatible avec des balises de références fixes (26) situées à proximité du sol (19) à nettoyer, et, à partir desquelles et à tout moment choisi, ledit appareil (1) est positionné sur ledit sol (19).

7. Appareil autonome de nettoyage automatique de sol suivant l'une quelconque des revendications 4 à 6 caractérisé en ce qu'il comporte une caméra vidéo (27) de tout type connu et un émetteur d'ondes (28) permettant de transmettre des images prises par ladite caméra à un poste de contrôle disposant d'un récepteur compatible.

8. Appareil autonome de nettoyage automatique de sol suivant l'une quelconque des revendications 4 à 7 caractérisé en ce que ledit pupitre (15) de contrôle et de commande de l'appareil (1) comporte au moins un levier de marche avant et arrière (6₁), un levier de changement (6₂) de direction droite et gauche, un clavier (17) d'au moins six boutons de contrôle des fonctions dudit programme d'ordres de missions, et un affichage (16) d'au moins 3 lignes dont la première affiche au moment considérée lesdites fonctions et d'ordres affectées alors auxdits boutons (17), la deuxième affiche les questions et les messages édités par le système électronique au fur et à mesure du déroulement dudit programme et la troisième affiche la réponse et l'ordre rentré par l'opérateur.

9. Appareil autonome de nettoyage automatique de sol suivant l'une quelconque des revendications 4 à 8 caractérisé en ce que ledit pupitre (15) de contrôle comporte un emplacement (30) permettant d'y connecter ledit support (24) d'enregistrement interchangeable.

10. Appareil autonome de nettoyage automatique de sol suivant l'une quelconque des revendications 4 à 9 caractérisé en ce que lesdites batteries embarquées (4) assurant l'alimentation électrique délivrent une tension de 48 volts et permettent un fonctionnement normal de l'appareil (1) pendant au moins 4 heures.

11. Appareil autonome de nettoyage automatique de sol suivant l'une quelconque des revendications 4 à 10 caractérisé en ce que le bras extensible (35) de la brosse latérale (2₂) est tel qu'il permet d'assurer un balayage le long d'une paroi (29) à 30 cm environ de l'appareil, laquelle distance (d) étant contrôlée par au moins trois capteurs (9) fixes de contrôle de distance situés du même côté et permettant l'asservissement de trajectoire (21) de l'appareil, tel que son axe (AA') reste parallèle le long de ladite paroi (29) et à distance constante.

12. Appareil autonome de nettoyage automatique de sol suivant l'une quelconque des revendications 4 à 11 caractérisé en ce que ledit pupitre de commande (15) inclue un microprocesseur qui gère les informations entrées par l'opérateur dans ce pupitre et celles générées par le système électronique (8) pour l'affichage (16) et l'affectation des fonctions du clavier (17), lequel microprocesseur remplace la carte d'interface spécifique (136) et permet la connexion dudit pupitre (15) par une ligne série directement au microprocesseur (10).

13. Appareil autonome de nettoyage automatique de sol suivant l'une quelconque des revendications 4 à 12 caractérisé en ce que les surfaces de séparation (36) entre la partie avant ou bloc-outil (1₂) et la partie arrière (1₁) peut être en forme de marche d'escalier constituée par exemple de tôle châssis avec un rebord (37₁) plan recevant les efforts d'appui comprenant un système (37₂) de centrage et de retenu entre les deux parties dont l'une contient par exemple au moins une partie femelle et l'autre une pièce mâle compatible.

14. Appareil autonome de nettoyage automatique de sol suivant l'une quelconque des revendications 4 à 13 caractérisé en ce qu'il comporte une poignée de manoeuvre (32) escamotable dans le carénage et associée à une commande de débrayage qui débraye automatiquement les roues motrices lorsqu'on tire ladite poignée pour la dégager dudit carénage.

## Claims

1. Process for automatically cleaning ground areas with an autonomous apparatus (1) of the type comprising known tools (2) adapted to said cleaning, propulsion and steering means by wheels (3), an electrical supply by on-board battery (4), various converters and relays (5), and control levers (6) regrouped on a console (15) equipped with a display (16) and a keyboard (17), and allowing operation of said tools (2) and said propulsion and steering means, which apparatus is covered with a protecting streamlined body (7) and comprises an electronic system (8) of the micro-computer type comprising at least one microprocessor (10), a fixed read-only memory (11), an erasable memory (12) and various input/output interface cards (13) connected in particular to the console (15) and to the various components allowing operation and start-up of said tools (2) and propulsion and steering means (3), fixed sensors (9) for monitoring distance from the obstacles and at least one initialization sensor (14), which sensors are connected to at least one of said input/output cards (134), characterized in that:
- said read-only memory (11) is loaded with a program ensuring, on the one hand, permanently and in known and automatic manner, the control of all the input/output interface cards (13) and of all the equipments connected to said cards and, on the other hand, as required, and successively in several places and for different tasks, one of the following operations:
- from a fixed reference point (18) on which said initialization sensor (14) is set, said apparatus is directed manually by these control levers (6) through the electronic system (10) so as to cause it to follow a given path (21) over the ground area (19) to be cleaned, with actuation of the appropriate tools (2), and each specific point (20) of this path (21) such as upon change of direction, of speed, start-up and stop of tools and change of mode, is recorded progressively in said erasable memory (12) of said microprocessor,
- at the end of this manual learning, said apparatus is replaced so that said initialization sensor (14) is reset on a fixed reference point (18) and the apparatus (1) is then made to effect in automatic mode the displacements and operations of a cleaning as memorized and following a recorded path (21),
- during this phase of execution, the environment of the apparatus is permanently scrutinized in known manner thanks to said fixed distance monitoring sensors (9), (38), (39), any obstacle (22) which appears and which was not there during the learning phase is detected and, if it hinders execution of the operations, the apparatus is stopped and an avoidance procedure (23) may then be effected,
- at any moment during this phase of execution, said apparatus may be returned to the initial fixed reference point (18) in manual mode and be made to recommence the same recorded task of cleaning along the learnt path (21) or to perform another cleaning task to be previously recorded in accordance with the same process.

2. Process for automatically cleaning ground areas according to claim 1, characterized in that:
- said learning phase is recorded in an erasable memory (12) located in an interchangeable recording support (24),
- said support is changed and as many tasks each corresponding to a ground area and to a given type of cleaning, chosen by the operator, are recorded on other supports.

3. Process for automatically cleaning ground areas according to either one of claims 1 and 2, characterized in that:
- said apparatus (1) is equipped with a known positioning system (25) and marking beacons (26) compatible with said positioning system (25) are placed at fixed reference points located near the ground area (19) to be cleaned,
- said beacons (26) are interrogated at given intervals and at each said specific point (20) of the learning phase, and the position then located, simultaneously with the information concerning the cleaning operation under way, is recorded in said erasable memory (12),
- during the execution phase, the real position of the apparatus with respect to the same beacons (26) is compared with that recorded during the same cleaning operation and at the same given point (20), and the displacement of the apparatus is corrected if the positions are different so as to reset the latter on the real path (21) recorded.

4. Autonomous apparatus for automatically cleaning ground areas, comprising a support frame of the type comprising known tools (2) adapted to said cleaning, propulsion and steering means by wheels (3), an electrical supply by on-board battery (4), various converters and relays (5), and control levers (6) re-grouped on a console (15) equipped with display means (16) and a keyboard (17) and allowing operation of said tools (2) and said propulsion and steering means, which apparatus is covered with a protecting streamlined body (7) and comprises an electronic system (8) of micro-computer type composed of at least one microprocessor (10), a fixed read-only memory (11), an erasable memory (12) and various input/output interface cards (13) connected in particular to the various components allowing operation and start-up of said tools (2) and propulsion and steering means (3), fixed distance monitoring sensors (9) and at least one initialization sensor (14), which sensors are connected to at least one of said input/output cards (134) and are placed on said protecting streamlined body (7), characterized in that it comprises a specific input/output card (136) of the microprocessor (10) connected to said console (15) and the read-only memory (11) of the electronic system (8) is loaded with a progam ensuring, on the one hand, permanently and in known and automatic manner, the control of all the input/output interface cards (13) and of all the equipments connected to said cards, and, on the other hand, as required and successively in several places and for different tasks, a learning phase by memorization of a cleaning task made manually in a first step, then a phase of execution by repetition of this recorded cleaning task, and this in automatic manner even in the case of an unexpected obstacle (22) detected by said distance monitoring sensors (9) and from the same reference point (18) on which said initialization sensor (14) is reset at the beginning of each execution of the same task on the same learnt path (21).

5. Autonomous apparatus for automatically cleaning ground area according to claim 4, characterized in that said erasable memory (12) is constituted by a copy card on which is connected any interchangeable recording support (24) of magnetic diskette type or other erasable memory of "RAM" type so that several tasks may be recorded and reproduced by simple change of said erasable memory support.

6. Autonomous apparatus for automatically cleaning ground areas according to either one of claims 4 and 5, characterized in that it comprises a known positioning system (25) compatible with fixed reference beacons (26) located near the ground area (19) to be cleaned and from which, and at any chosen moment, said apparatus (1) is positioned on said ground area (19).

7. Autonomous apparatus for automatically cleaning ground areas according to any one of claims 4 to 6, characterized in that it comprises a video camera (27) of any known type and a wave emitter (28) for transmitting images taken by said camera to a monitoring station presenting a compatible receiver.

8. Autonomous apparatus for automatically cleaning ground areas according to any one of claims 4 to 7, characterized in that said console (15) for monitoring and controlling the apparatus (1) comprises at least one forward and reverse operation lever (6₁), a right and left direction change lever (6₂) a keyboard (17) with at least six keys for monitoring the functions of said program of orders of tasks, and a display (16) of at least 3 lines of which the first displays at the moment in question said functions and orders then allocated to said keys (17), the second displays the questions and messages edited by the electronic system as said program progresses and the third displays the reply and the order entered by the operator.

9. Autonomous apparatus for automatically cleaning ground areas according to any one of claims 4 to 8, characterized in that said monitoring console (15) comprises a location (30) for connecting said interchangeable recording support (24) thereto.

10. Autonomous apparatus for automatically cleaning ground areas according to any one of claims 4 to 9, characterized in that said on-board batteries (4) ensuring electrical supply deliver a voltage of 48 volts and allow normal operation of the apparatus (1) for at least 4 hours.

11. Autonomous apparatus for automatically cleaning ground areas according to any one of claims 4 to 10, characterized in that the extensible arm (35) of the lateral brush (2₂) is such that it ensures a sweeping along a wall (29) at about 30 cm from the apparatus, which distance (d) being monitored by at least three fixed distance monitoring sensors (9) located on the same side and allowing servo-control of path (21) of the apparatus, such that its axis (AA') remains parallel along said wall (29) and at constant distance.

12. Autonomous apparatus for automatically cleaning ground areas according to any one of claims 4 to 11, characterized in that said control console (15) includes a microprocessor which manages the information entered by the operator in this console and that generated by the electronic system (8) for the display (16) and the allocation of the functions of the keyboard (17), which microprocessor replaces the specific interface card (136) and allows the connection of said console (15) by a series line directly to the microprocessor (10).

13. Autonomous apparatus for automatically cleaning ground areas according to any one of claims 4 to 12, characterized in that the separation surfaces (36) between the front part of the tool unit (1₂) and the rear part (1₁) may be in the form of a staircase constituted for example by chassis plate with a plane step (37₁) receiving the bearing efforts comprising a system (37₂) for centering and retaining between the two parts of which one contains for example at least one female part and the other a compatible male piece.

14. Autonomous apparatus for automatically cleaning ground areas according to any one of claims 4 to 13, characterized in that it comprises a manoeuvring handle (32) retractable in the streamlined body and associated with a disengagement control which automatically disengages the driving wheels when said handle is pulled in order to disengage it from said streamlined body.

## Patentansprüche

1. Verfahren zur automatischen Reinigung des Bodens mit einem autonomen Apparat (1), der bekannter für die Reinigung geeignete Werkzeuge (2), Antriebs- und Lenkungsmittel über Räder (3), eine Stromversorgung durch eine eine an Bord befindliche Batterie (4), verschiedene Umwandler und Relais (5) aufweist sowie Bedienungshebel (6), die auf einem Pult (15) angeordnet sind, das eine Anzeigevorrichtung (16) und eine Tastatur (17) aufweist und über die die Werkzeuge (2) und die Antriebs- und Lenkungsmittel bedient werden, wobei der Apparat mit einer Schutzverkleidung (7) überdeckt ist und ein elektronisches System (8) vom Typ eines Mikrocomputers mit mindestens einem Mikroprozessor (10), einem Festspeicher (11), einem löschbaren Speicher (12) und verschiedene Eingabe-/Ausgabe-Schnittstellenkarten (13) enthält, die insbesondere mit dem Pult (15) und den verschiedenen Bauteilen verbunden sind, die die Bedienung und das Ingangsetzen der Werkzeuge (2) und der Antriebs- und Lenkungsmittel (3) ermöglichen, sowie feste Sensoren zur Überwachung der Entfernung zu den Hindernissen und mindestens einen Initialisierungssensor (14), wobei die Sensoren an mindestens einer der Eingabe-/Ausgabe-Karten (134) angeschlossen sind, dadurch gekennzeichnet, daß
- der Fesrspeicher (11) mit einem Programm geladen wird, das einerseits ständig und in bekannter automatischer Weise die Verwaltung aller Eingabe-/Ausgabe-Schnittstellenkarten (13) und aller mit den Karten verbundenen Einrichtungen, und andererseits bei Bedarf nacheinander an verschiedenen Orten und für verschiedene Aufgaben eine der folgenden Operationen sicherstellt:
- Von einem festen Ausgangspunkt (18) aus, an welchem der Initialisierungssensor (14) eingestellt wird, wird der Apparat manuell über die Bedienungshebel (6) durch das elektronische Systeme (10) gelenkt, so daß er einen vorgegebenen Weg auf dem zu reinigenden Boden (19) zurücklegt, wobei die geeigneten Werkzeuge (2) in Gang gesetzt werden, und nach und nach wird jeder spezifische Punkt (20) dieses Weges (21) wie bei einer Änderung der Richtung oder der Geschwindigkeit, beim Starten und beim Stoppens der Werkzeuge oder bei einer Modusänderung im löschbaren Speicher (12) des Mikroprozessors aufgezeichnet,
- am Ende dieser manuellen Lernphase wird der Apparat so in die Ausgangsposition zurückgesetzt, daß der Initialisierungssensor wieder auf den Ausgangspunkt (18) eingestellt wird, und man läßt den Apparat (1) im automatischen Modus die Bewegungen und Reinigungsvorgänge wie gespeichert und nach einem aufgezeichneten Weg (21) ausführen,
- während dieser Ausführungsphase wird ständig und in bekannter Weise die Umgebung des Apparats mit Hilfe der festen Sensoren (9), (38), (39) zur Überwachung der Entfernung abgesucht, jedes auftretende Hindernis (22), das während der Lernphase nicht vorhanden war, wird dann erfaßt und, wenn es die Ausführung der Operationen stört, wird der Apparat gestoppt, so daß eine Umgehung (23) vorgenommen werden kann,
- zu jedem Augenblick dieser Ausführungsphase kann der Apparat zum festen Ausgangspunkt (18) manuell zurückgebracht werden, und man kann entweder den gleichen aufgezeichneten Reinigungsvorgang nach dem gelernten Weg (21) wieder starten oder man führt einen anderen Reinigungsvorgang durch, der vorher nach dem selben Verfahren aufgezeichnet wurde.

2. Verfahren zur automatischen Reinigung des Bodens nach Anspruch 1, dadurch gekennzeichnet,
- daß die Lernphase in einem löschbaren Speicher (12) aufgezeichnet wird, der sich in einem austauschbaren Aufzeichnungsträger (24) befindet,
- daß der Träger ausgewechselt wird und daß auf anderen Trägern so viele Operationen aufgezeichnet werden, wie sie jeweils einem Bodentyp und einer gegebenen, von der Bedienungsperson gewählten Reinigungsart entsprechen.

3. Verfahren zur automatischen Reinigung des Bodens nach einem der Ansprüche 1 und 2, dadurch gekennzeichnet,
- daß der Apparat (1) mit einem bekannten Positionierungssystem ausgestattet wird, und daß an festen Referenzpunkten in der Nähe des zu reinigenden Bodens (19) Markierungen (26) angeordnet werden, die mit dem Positionierungssystem (25) kompatibel sind,
- daß die Markierungen (26) in gegebenem Abstand und bei jedem sogenannten spezifischen Punkt (20) der Lernphase abgefragt werden, und die ermittelte Position gleichzeitig mit den Informationen im löschbaren Speicher (12) aufgezeichnet wird, die den laufenden Reinigungsvorgang betreffen,
- daß während der Ausführungsphase die tatsächliche Position des Apparats im Verhältnis zu den selben Markierungen (26) mit derjenigen verglichen wird, die während des gleichen Reinigungsvorgangs am selben gegebenen Punkt (20) aufgezeichnet wurde, und daß die Bewegung des Apparats korrigiert wird, wenn die Positionen abweichen, so daß er wieder auf den aufgezeichneten tatsächlichen Weg (21) gebracht wird .

4. Autonomer Apparat zur automatischen Reinigung des Bodens, mit einem Gestell, der bekannte für die Reinigung geeignete Werkzeuge (2), Antriebs- und Lenkungsmittel über Räder (3), eine Stromversorgung durch eine an Bord befindliche Batterie (4), verschiedene Umwandler und Relais (5) aufweist sowie Bedienungshebel (6), die auf einem Pult (15) angeordnet sind, das eine Anzeigevorrichtung (16) und eine Tastatur (17) aufweist, und über die die Werkzeuge (2) und die Antriebs- und Lenkungsmittel bedient werden, wobei der Apparat mit einer Schutzverkleidung (7) überdeckt ist und ein elektronisches System (8) vom Typ eines Mikrocomputers mit mindestens einem Mikroprozessoren (10), einem Festspeicher (11), einem löschbaren Speicher (12) und verschiedene Eingabe-/Ausgabe-Schnittstellenkarten (13) enthält, die insbesondere mit dem Pult (15) und den verschiedenen Bauteilen verbunden sind, die die Bedienung und das Ingangsetzen der Werkzeuge (2) und der Antriebs- und Lenkungsmittel (3) ermöglichen, sowie feste Sensoren zur Überwachung der Entfernung und mindestens einen Initialisierungssensor (14), wobei die Sensoren an mindestens einer der Eingabe-/Ausgabe-Karten (134) verbunden und auf der Schutzverkleidung (7) angebracht sind, dadurch gekennzeichnet, daß er eine spezifische Eingabe-/Ausgabe-Karte (136) des Mikroprozessors (10) aufweist, die mit dem Pult (15) verbunden ist, und daß der Festspeicher (11) des elektronischen Systems (8) mit einem Programm geladen ist, das einerseits ständig und in bekannter und automatischer Weise die Verwaltung aller Eingabe-/Ausgabe-Schnittstellenkarten (13) und aller mit den Karten verbundenen Einrichtungen sicherstellt und andererseits bei Bedarf nacheinander an verschiedenen Orten und für verschiedene Aufgaben eine Lernphase durch Speicherung einer in einer ersten Zeit manuell durchgeführten Reinigungsoperation und dann eine Ausführungsphase durch Wiederholung dieser aufgezeichneten Reinigungsoperation durchführt, wobei dieses automatisch geschieht, auch im Falle eines unvorhergesehenes Hindernisses (22), das von den Sensoren (9) zur Entfernungsüberwachung erfaßt wird, und wobei von einem selben Ausgangspunkt (18) ausgegangen wird, an welchem der Initialisierungssensor (14) am Anfang der jeweiligen Ausführung der gleichen Operation auf dem selben Weg eingestellt wird.

5. Autonomer Apparat zur automatischen Reinigung des Bodens nach Anspruch 4, dadurch gekennzeichnet, daß der löschbare Speicher (12) aus einer Sicherungskarte besteht, an welche jeder austauschbare Aufzeichnungsträger (24) vom Typ einer magnetischen Diskette oder eines anderen löschbaren Speicher des Typs "RAM" angeschlossen ist, daß mehrere Operationen durch einfaches Auswechseln des Trägers des löschbaren Speichers aufgezeichnet und wiedergeben werden können.

6. Autonomer Apparat zur automatischen Reinigung des Bodens nach einem der Ansprüche 4 und 5, dadurch gekennzeichnet, daß er ein bekanntes Positionierungssystem (25) aufweist, das mit festen Markierungen (26) in der Nähe des zu reinigenden Bodens kompatibel ist und von welchen aus der Apparat (1) zu jedem gewählten Augenblick auf dem Boden (19) positioniert wird.

7. Autonomer Apparat zur automatischen Reinigung des Bodens nach einem der Ansprüche 4 bis 6, dadurch gekennzeichnet, daß er eine Videokamera (27) Jedes bekannten Typs und einen Wellensender (28) aufweist, der die Übertragung der von der Kamera aufgenommenen Bilder an eine Kontrollstation ermöglicht, die über einen kompatiblen Empfänger verfügt.

8. Autonomer Apparat zur automatischen Reinigung des Bodens nach einem der Ansprüche 4 bis 7, dadurch gekennzeichnet, daß das Pult (15) zur Überwachung und Steuerung des Apparats (1) mindestens einen Vorwärts- und Rückwärtshebel (61), einen Schalthebel (62) nach rechts und nach links, eine Tastatur (17) mit mindestens sechs Knöpfen zur Kontrolle der Funktionen des Operationsbefehlprogramms sowie eine Anzeigevorrichtung (16) mit mindestens 3 Zeilen aufweist, von denen die erste Zeile im betreffenden Augenblick die den Knöpfen zugeordneten Funktionen und Befehlen anzeigt, die zweite Zeile die vom elektronischen System im Laufe des Programms ausgegebenen Fragen und Meldungen anzeigt und die dritte Zeile die Antwort und das von der Bedienungsperson eingegeben Befehl anzeigt.

9. Autonomer Apparat zur automatischen Reinigung des Bodens nach einem der Ansprüche 4 bis 6, dadurch gekennzeichnet, daß das Überwachungspult (15) eine Stelle (30) aufweist, an welche der austauschbare Aufzeichnungsträger (24) angeschlossen werden kann.

10. Autonomer Apparat zur automatischen Reinigung des Bodens nach einem der Ansprüche 4 bis 9, dadurch gekennzeichnet, daß die an Bord befindlichen Batterien (4) , die die Stromversorgung sicherstellen, eine Spannung von 48 Volt liefern und einen normalen Betrieb des Apparats (1) während mindestens 4 Stunden erlauben.

11. Autonomer Apparat zur automatischen Reinigung des Bodens nach einem der Ansprüche 4 bis 10, dadurch gekennzeichnet, daß der Teleskoparm (35) der Seitenbürste (22) so ausgeführt ist, daß er das Fegen an einer Wand (24) entlang in etwa 30 cm Entfernung des Apparats sicherstellt, wobei diese Entfernung (d) durch mindestens drei festen Sensoren (9) zur Überwachung der Entfernung kontrolliert wird, wobei die Sensoren auf der gleichen Seite angebracht sind und die Steuerung des Weges (21) des Apparats ermöglichen, so daß seine Achse A-A parallel entlang der Wand (29) und in konstanter Entfernung bleibt.

12. Autonomer Apparat zur automatischen Reinigung des Bodens nach einem der Ansprüche 4 bis 11, dadurch gekennzeichnet, daß das Steuerungspult (15) einen Mikroprozessor enthält, der die durch die Bedienungsperson im Pult eingegebenen Informationen sowie die vom elektronischen System (8) für die Anzeige (16) und die Zuordnung der Funktionen der Tastatur (17) erzeugten Informationen verwalter, wobei der Mikroprozessor die spezifische Schnittstellenkarte (136) ersetzt und die Verbindung vom Pult (15) direkt zum Miktoprozessor (10) über eine Serienlinie erlaubt.

13. Autonomer Apparat zur automatischen Reinigung des Bodens nach einem der Ansprüche 4 bis 12, dadurch gekennzeichnet, daß die Trennflächen (36) zwischen dem vorderen Teil oder Werkzeug-Block (12) und dem hinteren Teil (11) als stufenförmig ausgebildet werden und zum Beispiel aus einem Blechgestell mit einem flachen Rand (37₁) bestehen können, das die Stützkräfte aufnimmt und ein System (37₂) zum Zentrieren und Zusammenhalten der beiden Teile enthält, wobei der eine zum Beispiel mindestens einen aufnehmenden Teil und der andere einen kompatiblen Steckteil aufweisen.

14. Autonomer Apparat zur automatischen Reinigung des Bodens nach einem der Ansprüche 4 bis 13, dadurch gekennzeichnet, daß er einen in der Verkleidung versenkbaren Betätigungsgriff aufweist, die einer Entkupplungssteuerung zugeordnet ist, die die Antriebsräder automatisch entkuppeln, wenn der Griff aus der Verkleidung herausgezogen wird.
